# EUROPÄISCHE PATENTSCHRIFT

(11) **EP 1 036 910 B1**
(45) Veröffentlichungstag und Bekanntmachung des Hinweises auf die Patenterteilung: **16.06.2004**
(21) Anmeldenummer: 00102297.9
(22) Anmeldetag: 17.02.2000
(51) Int. Cl.: B60J 10/00, E06B 7/22

(54) **Dichtungsanordnung für ein Bauteil nach Art einer Tür oder Klappe**
Sealing device for a constuction element like a door or a flap
Dispositif d'étanchéité pour un élément de construction du type de porte ou de volet

(30) Priorität: 18.03.1999 DE 19912176
(43) Veröffentlichungstag der Anmeldung: 20.09.2000
(73) Patentinhaber: Volkswagen Aktiengesellschaft, 38436 Wolfsburg (DE)
(72) Erfinder: Sauss, Christian, Dipl.-Ing., 38553 Wasbüttel (DE); van Dinh, Khoa, 22149 Hamburg (DE); Scholz, Wolfgang, 38547 Calberlah (DE)
(74) Vertreter: Basfeld, Rainer, Dr. Dipl.-Phys.

(56) Entgegenhaltungen:
- EP-A- 0 620 134
- EP-A- 0 836 961
- DE-A- 3 321 791
- DE-A- 19 747 942
- DE-U- 9 300 312
- US-A- 5 806 247

## Beschreibung

Die Erfindung betrifft eine Dichtungsanordnung gemäß dem Oberbegriff des Patentanspruchs 1. Insbesondere ist dabei an eine Dichtungsanordnung für eine Kraftfahrzeugtür oder Gepäckraumklappe gedacht.

Betrachtet man den bevorzugten Einsatzfall der Erfindung, nämlich als Dichtungsanordnung für eine Kraftfahrzeugtür, so sehen übliche Konstruktionen vor, den Türrahmen mit parallel zueinander weisenden, zugleich zur Verschweißung dienenden Flanschen zu versehen und auf diese eine weiche Profildichtung aufzustecken. Diese Lösung setzt aber eine Konstruktion für den Türrahmen voraus, die Schweißflansche gerade an derjenigen Stelle vorsieht, an der die weiche Profildichtung zur Abdichtung des Türspaltes bei geschlossener Tür festgelegt werden muss. Schon aus Gewichtsgründen ist man bei modernen Konstruktionen aber daran interessiert, besondere Schweißflansche einzusparen.

Eine Dichtungsanordnung der eingangs genannten Art ist aus dem gattungsgemäßen US-Patent US 5,806,247 bekannt. Die darin beschriebene Dichtungsanordndung ist für einen Spalt zwischen einem Öffnungsrand und einem Rahmen einer Tür vorgesehen. An dem Rahmen der Tür ist ein Profilteil angeschweißt, das insbesondere ein C-förmiges Querschnittsprofil aufweist. In das C-förmige Querschnittsprofil ist teilweise eine Profildichtung einbringbar, die zur Abdichtung des Spaltes zwischen dem Öffnungsrand und dem Rahmen der Tür dient. Die Profildichtung wird durch mechanischen Formschluss an dem Profilteil befestigt.

Bei Abdichtung und Festlegung von Fahrzeugfensterscheiben findet in zunehmendem Maße das sogenannte Pop-Out-Prinzip Anwendung, bei dem der Scheibenrand von einem demgemäss etwa U-förmigen Dichtelement aufgenommen ist, das eine im Querschnitt mit Hinterschnitten versehene Ausnehmung zur Aufnahme einer Kleberraupe aufweist (EP 0 620 134 A2). Diese liegt mit ihrer Stirnfläche am Fensterrahmen an und ist mit diesem verklebt. Infolge geeigneter Wahl der Materialien für Kleber und Dichtkörper erfolgt keine Adhäsion zwischen beiden, sondern die Kleberraupe ist allein durch die erwähnte Profilierung mechanisch formschlüssig am Dichtkörper arretiert. Dieses Konstruktionsprinzip bietet die vorteilhafte Möglichkeit, beispielsweise während örtlicher Reparaturen an der Fahrzeugkarosserie die formschlüssige Verbindung zwischen Kleberkörper und Dichtkörper gleichsam durch Abziehen der Scheibe aufzuheben und später die Scheibe wieder unter erneutem Eindringen des Kleberkörpers in die Ausnehmung des Dichtkörpers in ihrer Gebrauchslage zu arretieren. In Abweichung von den Verhältnissen bei einer Tür oder Klappe erfolgen bei der Abdichtung einer Fensterscheibe aber im Betrieb derselben keine Relativbewegungen zwischen der Scheibe einerseits und ihrem Rahmen andererseits, so dass auch ganz andere - geringere - mechanische Beanspruchungen vorliegen.

Bei der Herstellung und insbesondere Plazierung von Dichtungsanordnungen macht verständlicherweise auch die Kraftfahrzeugtechnik vom Einsatz rechnergestützter Fertigungseinrichtungen Gebrauch. So ist es bekannt, beispielsweise Kleberraupen unter Verwendung programmgesteuerter Hersteliungsautomaten gleichmäßig und in vorgegebener Konfiguration aufzutragen. Nimmt man den Trend hinzu, möglichst viele Einzelteile zu vorgefertigten Modulen zusammenzufassen und diese Module dann mit dem Fahrzeug zu verbinden bzw. in das Fahrzeug einzubauen, so läge wohl eine die eingangs beschriebenen Nachteile bekannter Türdichtungsanordnungen vermeidende Vorgehensweise im Zuge der Entwicklung, bei der die Dichtungsanordnung als vorgefertigter Modul, d.h. als Einheit, am Tür- bzw. Klappenrahmen befestigt wird. Zwar könnte man auch hier daran denken, Handhabungsautomaten einzusetzen, jedoch ergäben sich Schwierigkeiten bei der "Handhabung" kompletter Dichtungsanordnungen, da diese ihre endgültige Gestalt ja erst an der jeweiligen Tür bzw. Klappe erhalten.

Mithin liegt der Erfindung die Aufgabe zugrunde, eine gattungsgemäße Dichtungsanordnung für ein Bauteil nach Art einer Tür oder Klappe zu schaffen, die nur insoweit die vorteilhafte Verwendung von Handhabungsautomaten ausnutzt, wie dies zweckmäßig ist, im übrigen aber für einfache Montagebereiche auf bewährte Handarbeit zurückgreift.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Bei der erfindungsgemäßen Dichtungsanordnung wird also zunächst ein Profilteil mit dem Rahmen verklebt, das bei dem eingangs geschilderten Stand der Technik durch Rahmenbestandteile selbst, nämlich Schweißflansche, gebildet ist. Dieser Klebvorgang kann unter Verwendung von gesteuerten Handhabungsautomaten erfolgen. Auf das Profilteil wird dann vorzugsweise von Hand die weiche Profildichtung aufgesteckt, die in der Regel hohl ausgeführt ist. Dabei besteht die Möglichkeit, das Profilteil mit einem Gerüstband oder einer anderen Armierung zu versehen und es im Querschnitt so breit zu gestalten, dass es praktisch unter Ausnutzung der gesamten Breite der Profildichtung auf dem Rahmen der Tür oder der Klappe aufliegt. Demgemäss kann sich auch der Kleber über eine große Breite erstrecken, so dass eine sichere Verbindung zwischen Profilteil einerseits und Rahmen der Tür oder Klappe andererseits hergestellt ist.

Das Querschnittsprofil des Profilteils wird man etwa tannenbaumartig wählen, so dass auch bei Verzicht auf Klebverbindungen zwischen Profildichtung und Profilteil eine formschlüssige Arretierung der Profildichtung gewährleistet ist.

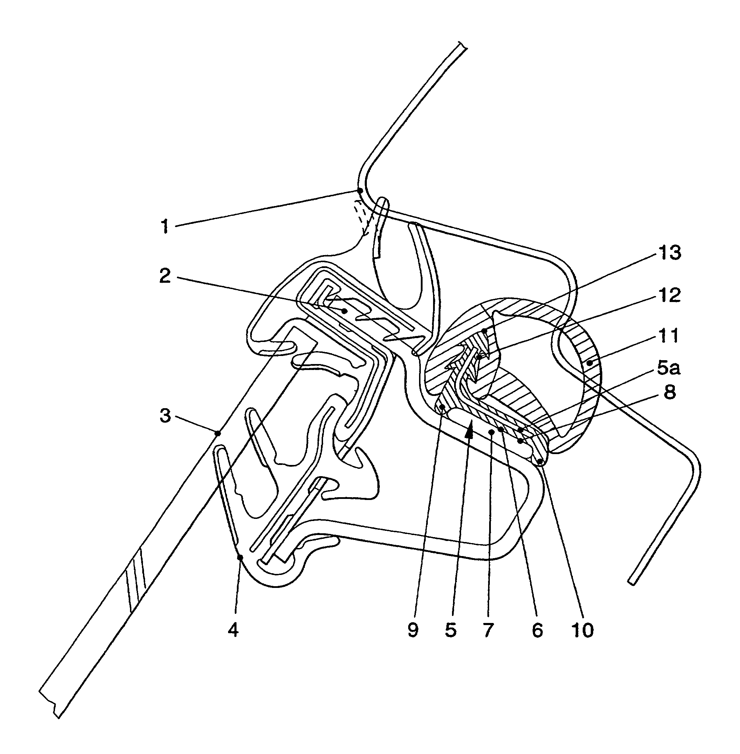

Ein Äusführungsbeispiel der Erfindung wird im folgenden anhand der Zeichnung erläutert, die einen Querschnitt durch den Bereich des linken Dachrahmens eines Kraftfahrzeugs wiedergibt.

Der zugleich den Türöffnungsrahmen darstellende Dachrahmen ist bei 1 angedeutet, der Rahmen der Tür bei 2. Der Aufbau der Karosserie interessiert im einzelnen nicht, da der Einsatz der Erfindung diesbezüglich nicht gebunden ist. Man erkennt lediglich bei 3 das absenkbare Türfenster und die ihm zugeordnete Fensterdichtung 4.

Nach oben und damit senkrecht zur Bewegungsrichtung der Tür bei den Öffnungsbewegungen weisend ist das im wesentlichen L-förmige Profilteil 5 (mit Gerüstband 5a) mit seinem Schenkel 6 über die Kleberschicht 7 an einer nach oben bzw. außen weisenden Fläche des Rahmens 2 durch Kleben befestigt. Zur Aufnahme von Klebermaterial weist der Schenkel 6 auf seiner dem Rahmen 2 zugekehrten Seite die Vertiefung oder Ausnehmung 8 auf, die, wie die Zeichnung deutlich erkennen läßt, gleichsam durch Stege 9 und 10 seitlich begrenzt ist; diese Stege 9 und 10 stützen das Profilteil 5 auf dem Rahmen 2 ab und sichern damit eine vorgegebene Stellung des Profilteils 5.

Während die Montage des Profilteils 5 am Rahmen 2 unter Einsatz von Handhabungsautomaten erfolgen kann, wird man zum Aufstecken der Profildichtung 11 Handarbeit vorziehen, zumal hier kein Kleber Verwendung findet. Das schließt nicht aus, dass bei 13 ein Dichtmittel zur sicheren Abdichtung zwischen Profil 5 und Profildichtung 11 vorgesehen sein kann. Das Profilteil 5 besitzt nämlich eine Profilierung 12, die im Querschnitt etwa die Form eines Tannenbaums hat und demgemäss eine Arretierung der Profildichtung 11 allein durch mechanischen Formschluss sicherstellt. Umgekehrt bietet die Erfindung auch die Möglichkeit, im Bedarfsfall eine gegebenenfalls beschädigte oder verschmutzte Dichtung auszutauschen.

Mit der Erfindung ist demgemäss eine gattungsgemäße Dichtungsanordnung geschaffen, die unter Vermeidung der Nachteile des eingangs beschriebenen Standes der Technik ein derart "unterteiltes" Montageverfahren zulässt, dass der Einsatz von Handhabungsautomaten und die Handarbeit jeweils auf Montageschritte beschränkt sind, für die sie optimiert sind.

## Patentansprüche

1. Dichtungsanordnung für einen Spalt zwischen einem Öffnungsrand und einem einen Rahmen (2) aufweisenden Bauteil nach Art einer Tür oder Klappe, das zwischen die Öffnung freigebenden und verschließenden Stellungen im wesentlichen senkrecht zum Öffnungsrand bewegbar ist und dessen Rahmen (2) mit einem Profilteil (5) versehen ist, das eine Profildichtung (11) trägt, die bei in Schließstellung befindlichem Bauteil unter Verformung dichtend an dem Rand anliegt, wobei das Profilteil (5) ein Querschnittsprofil (12) aufweist, das die Profildichtung (11) nur durch mechanischen Formschluss arretiert, **dadurch gekennzeichnet, dass** das Profilteil (5) im wesentlichen L-förmig ausgebildet ist mit einem ersten Schenkel (6), der mit dem Rahmen (2) verklebt ist, und mit einem zweiten Schenkel, der senkrecht zur Bewegungsrichtung des Rahmens (2) von diesem wegweist und ein Querschnittsprofil (12) zur Arretierung der Profildichtung (11) aufweist.

2. Dichtungsanordnung nach Anspruch 1, **dadurch gekennzeichnet, dass** das Profilteil (5) ein Gerüstband enthält.

3. Dichtungsanordnung nach Anspruch 1 oder 2, **dadurch gekennzeichnet, dass** das Profilteil (5) auf seiner dem Rahmen (2) zugekehrten Seite eine Vertiefung (8) zur Aufnahme eines Klebers (7) aufweist.

## Claims

1. Sealing arrangement for a gap between an opening edge and a structural member in the manner of a door or flap, which structural member has a frame (2), can be moved essentially perpendicularly with respect to the opening edge between positions releasing and closing the opening and the frame (2) of which is provided with a profiled part (5) which bears a profiled seal (11) which, when the structural member is in the closed position, bears, while simultaneously being deformed, in a sealing manner against the edge, the profiled part (5) having a cross-sectional profile (12) which retains the profiled seal (11) only by means of a mechanical form-fitting connection, **characterized in that** the profiled part (5) is of essentially L-shaped design and has a first limb (6), which is bonded to the frame (2), and has a second limb, which points away from the frame (2) perpendicularly with respect to the direction of movement thereof, and has a cross-sectional profile (12) for retaining the profiled seal (11).

2. Sealing arrangement according to Claim 1, **characterized in that** the profiled part (5) contains a structure band.

3. Sealing arrangement according to Claim 1 or 2, **characterized in that** the profiled part (5), on its side facing the frame (2), has a depression (8) for receiving an adhesive (7).

## Revendications

1. Dispositif d'étanchéité pour une fente entre un bord d'ouverture et un composant présentant un cadre (2) du type d'une porte ou d'un volet, qui peut se déplacer entre des positions libérant et fermant l'ouverture essentiellement perpendiculai-rement au bord d'ouverture et dont le cadre (2) est pourvu d'une partie profilée (5), qui porte un joint profilé (11) qui lorsque le composant se trouve dans la position de fermeture, s'applique contre le bord de manière hermétique en se déformant, la partie profilée (5) présentant un profil en section transversale (12) qui ne bloque le joint profilé (11) que par engagement mécanique par coopération de forme, **caractérisé en ce que** la partie profilée (5) est réalisée avec essentiellement une forme en L avec une première branche (6), qui est collée au cadre (2), et avec une deuxième branche qui est tournée à l'écart du cadre (2) perpendiculairement à la direction de déplacement du cadre (2) et présente un profil en section transversale (12) pour bloquer le joint profilé (11).

2. Dispositif d'étanchéité selon la revendication 1, **caractérisé en ce que** la partie profilée (5) contient une bande d'armature.

3. Dispositif d'étanchéité selon la revendication 1 ou 2, **caractérisé en ce que** la partie profilée (5) présente, sur son côté tourné vers le cadre (2), un renfoncement (8) pour recevoir un adhésif (7).
